(19) Europäisches Patentamt
European Patent Office
Office européen des brevets

(11) Veröffentlichungsnummer: **0 013 750**
**A1**

(12) **EUROPÄISCHE PATENTANMELDUNG**

(21) Anmeldenummer: **79105325.9**

(22) Anmeldetag: **21.12.79**

(51) Int. Cl.³: **C 09 B 35/36**, C 09 B 35/50, C 09 B 35/56, D 06 P 1/06

(30) Priorität: **17.01.79 DE 2901654**

(43) Veröffentlichungstag der Anmeldung: **06.08.80 Patentblatt 80/16**

(84) Benannte Vertragsstaaten: **CH DE FR GB IT**

(71) Anmelder: **BASF Aktiengesellschaft, Carl-Bosch-Strasse 38, D-6700 Ludwigshafen (DE)**

(72) Erfinder: **Ellingsfeld, Heinz, Dr., Pierstrasse 9 A, D-6710 Frankenthal (DE)**
Erfinder: **Hansen, Guenter, Dr., Mundenheimer Strasse 168, D-6700 Ludwigshafen (DE)**
Erfinder: **Seybold, Guenter, Dr., Otto-Dill-Strasse 32, D-6700 Ludwigshafen (DE)**
Erfinder: **Zeidler, Georg, Mutterstadter Strasse 19, D-6701 Dannstadt-Schauernheim (DE)**

(54) **Tris- oder Tetrakisazostilbenfarbstoffe und deren Verwendung beim Färben cellulosehaltigen Materials.**

(57) Polyazofarbstoffe, die in Form der freien Säure der allgemeinen Formel I

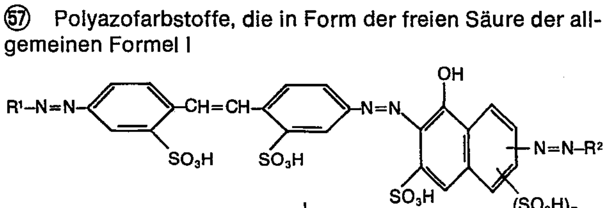

I

entsprechen, in der

n die Zahlen 0 oder 1

$R^1$ einen Rest der Formel

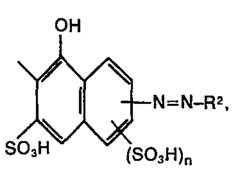

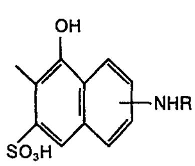

oder

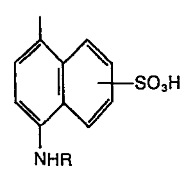

$R^2$ einen Rest der Formel

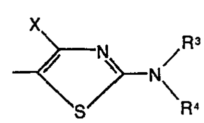

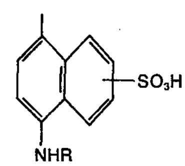

oder

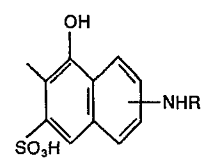

R Wasserstoff, gegebenenfalls durch Hydroxy, $C_1$- bis $C_4$-Alkoxy, Carboxyl oder Cyan substituiertes $C_1$- bis $C_4$-Alkyl, Allyl, Benzyl, Phenyl oder Tolyl,

$R^3$ gegebenenfalls substituiertes Alkyl, Alkenyl, Aralkyl, Cycloalkyl oder Aryl,

$R^4$ Wasserstoff oder gegebenenfalls substituiertes Alkyl oder Alkenyl und

X gegebenenfalls substituiertes Aryl bedeuten.

Die erfindungsgemäßen Verbindungen eignen sich sehr gut zum Färben von cellulosehaltigem Material, z. B. Baumwolle und Papier sowie für Leder.

EP 0 013 750 A1

BASF Aktiengesellschaft O.Z. 0050/033623

BEZEICHNUNG GEÄNDERT
siehe Titelseite

Polyazofarbstoffe

Die Erfindung betrifft Farbstoffe, die in Form der freien Säure der allgemeinen Formel I

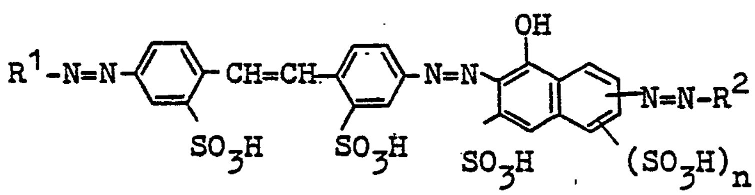

I

entsprechen, in der

n die Zahlen 0 oder 1

$R^1$ einen Rest der Formel

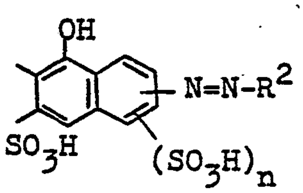

,

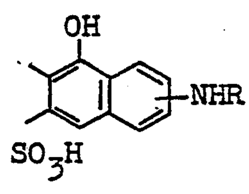

oder

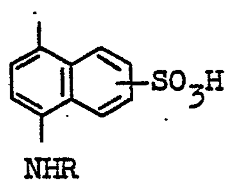

$R^2$ einen Rest der Formel

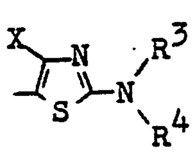

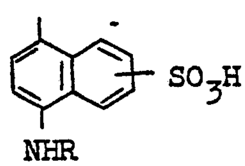

oder

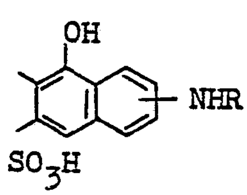

Bg/BL

R Wasserstoff, gegebenenfalls durch Hydroxy, $C_1$- bis $C_4$-Alkoxy, Carboxyl oder Cyan substituiertes $C_1$- bis $C_4$-Alkyl, Allyl, Cyclohexyl, Benzyl, Phenyl oder Tolyl,

$R^3$ gegebenenfalls substituiertes Alkyl, Alkenyl, Aralkyl, Cycloalkyl oder Aryl,

$R^4$ Wasserstoff oder gegebenenfalls substituiertes Alkyl oder Alkenyl und

X gegebenenfalls substituiertes Alkyl oder Aryl bedeuten.

Reste R sind neben den bereits genannten im einzelnen beispielsweise:

**Methyl, Äthyl, Propyl, Butyl, ß-Hydroxyäthyl, ß-Hydroxypropyl, ß-Cyanäthyl, ß-Carboxyäthyl, ß-Methoxyäthyl, ß-Äthoxyäthyl oder ß-Butoxyäthyl.**

**Vorzugsweise ist R Wasserstoff oder Phenyl.**

**Reste $R^3$ sind im einzelnen z. B.:**

**$CH_3$, $C_2H_5$, $C_3H_7$, $C_4H_9$, Allyl, $C_2H_4OH$, $C_2H_4CN$, $C_2H_4COO$-$C_1$-$C_4$-Alkyl, $C_2H_4COOC_2H_4(OC_2H_4)_mH$ (m = 1, 2, 3), $CH_2C_6H_5$, $C_6H_4OH$, $C_6H_4CH_3$, $C_6H_5$, $C_6H_4Cl$, $C_6H_4SO_3H$, $C_6H_3(SO_3H)_2$, $C_6H_3ClSO_3H$, $C_6H_3BrSO_3H$, $C_6H_3Alkyl_{(C_1 \text{ bis } C_4)}SO_3H$,**

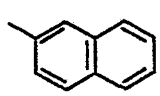 , 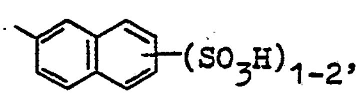 , 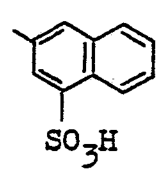 ,

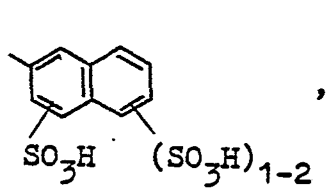 , 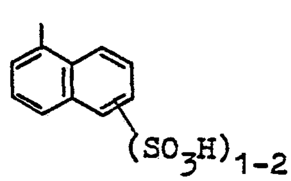 , 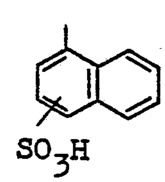

oder 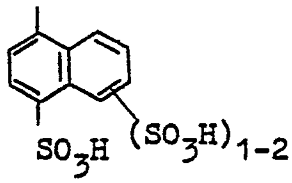 .

Für $R^4$ sind neben Wasserstoff die gleichen Alkyl- und Alkenylreste zu nennen.

Bevorzugt für $R^3$ sind z. B.:
$C_1$-$C_4$-Alkyl, $C_6H_5$, $C_6H_4Cl$, $C_6H_4SO_3H$, $C_6H_3CH_3SO_3H$, $C_6H_3ClSO_3H$,

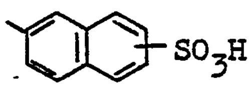 oder 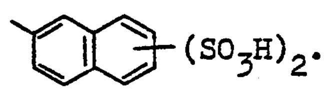 .

Als Reste X kommen z. B. in Betracht:
$C_6H_5$, $C_6H_4C_1$-$C_4$-Alkyl, $C_6H_4Cl$, $C_6H_4Br$, $C_6H_3ClCH_3$, $C_6H_4NHCOCH_3$, $C_6H_4SO_3H$, $C_6H_3CH_3SO_3H$, $C_6H_3NHCOCH_3SO_3H$, $C_6H_4NO_2$, $C_6H_4OC_1$-$C_4$-Alkyl, $C_6H_3Cl_2$, $C_6H_3Br_2$,

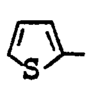 oder 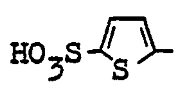 sowie $CH_3$.

Zur Herstellung der Verbindungen der Formel I kann man Tetrazoniumverbindungen eines Diamins der Formel II a

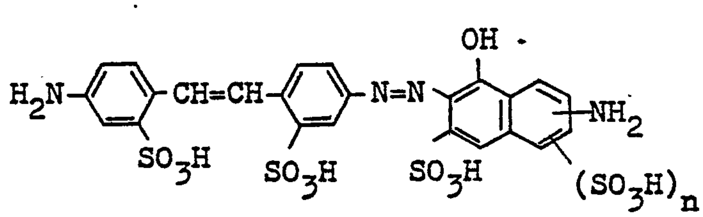 II a

mit Verbindungen der Formel

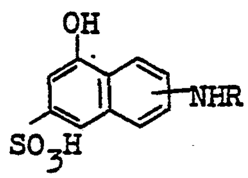

und/oder

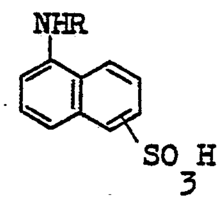

kuppeln oder Tetrazoniumverbindungen eines Diamins der Formel II b

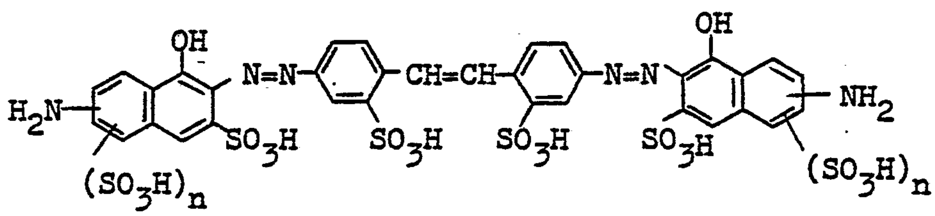

II b

mit Verbindungen der Formel

$H\text{-}R^2$

umsetzen.

Einzelheiten der Herstellung können den Beispielen entnommen werden, in denen sich Angaben über Teile und Prozente, sofern nicht anders vermerkt, auf das Gewicht beziehen.

Die Farbstoffe der Formel I eignen sich als substantive Farbstoffe zum Färben von cellulosehaltigem Material, z. B. Baumwolle oder Leder und insbesondere für Papier.

Als Papiermaterial seien z. B. gebleichter Sulfitzellstoff, Holzschliff in Mischung mit gebleichtem oder ungebleichtem Sulfitzellstoff oder geleimter Papierstoff genannt. Man erhält im wesentlichen dunkelblaue Färbungen mit guten Echtheiten. Die Substantivität der erfindungs-

gemäßen Farbstoffe ist sehr gut; es verbleiben nur relativ geringe Mengen in den Färbebädern.

Von besonderer Bedeutung sind Verbindungen der Formel I, bei denen
$R^1$ und $R^2$ ein Rest der Formel

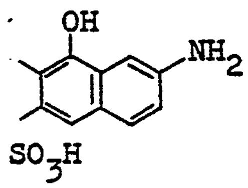

oder

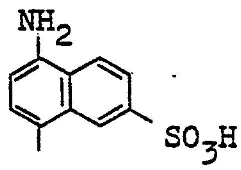

sind sowie Verbindungen, bei denen
$R^1$ ein Rest der Formel

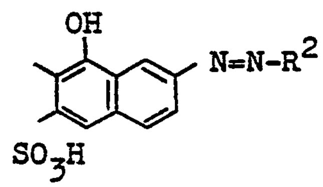

ist, und

$R^2$ der Formel

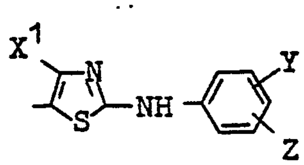

oder

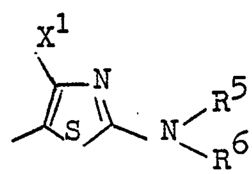

entspricht, wobei

$X^1$ gegebenenfalls durch Chlor, Methyl, Methoxy oder Äthoxy substituiertes Phenyl,

Y Wasserstoff, Chlor, Methyl, Methoxy oder Hydroxysulfonyl,

Z Wasserstoff oder Hydroxylsulfonyl und $R^5$ und $R^6$ unabhängig voneinander $C_1$- bis $C_4$-Alkyl oder Allyl sind.

Beispiel 1

37,3 Teile 4,4'-Diaminostilben-2,2'-disulfonsäure in Form des Dinatriumsalzes werden in 550 Teilen Wasser gelöst, mit 13,8 Teilen Natriumnitrit in Form einer 30prozentigen wäßrigen Lösung versetzt und innerhalb von 30 Minuten in 61 Teile 30prozentige Salzsäure und 50 Teile Eis eingegossen. Die Temperatur steigt bis 8°C. Es wird 5 Stunden nachgerührt, wobei die Temperatur allmählich bis 17°C steigt. Man löst dann 47,8 Teile 2-Amino-8-hydroxynaphthalin-6-sulfonsäure in 500 Teilen Wasser unter Zusatz von 8 Teilen Natriumhydroxid und läßt dazu die Suspension der Bisdiazoverbindung zulaufen, wobei durch Zugabe von 40 Teilen Natriumcarbonat in Form einer 20prozentigen Lösung der pH-Wert ständig bei 10 und die Temperatur durch Eiszugabe bei 10°C gehalten werden. Es wird 1 Stunde nachgerührt und der ausgeschiedene Disazofarbstoff wird abgesaugt.

Der Farbstoff wird danach in 3700 Teilen Wasser über Nacht aufgeschlämmt, mit 13,8 Teilen Natriumnitrit in Form einer 30prozentigen Lösung versetzt und innerhalb 1 Stunde in 61 Teile 30prozentige Salzsäure eingegossen, wobei die Temperatur durch Eiszugabe unter 15°C gehalten wird. Die Suspension wird noch 1 Stunde nachgerührt und zu einer Lösung von 70 Teilen 2-(4'-Sulfophenyl)-4-phenyl-3,1-thiazol in 600 Teilen Wasser und 8 Teilen Natriumhydroxid gegeben, wobei der pH-Wert mit Natriumcarbonat bei 9-10 und die Temperatur durch Eiszugabe bei 10°C gehalten werden. Das Kupplungsgemisch wird über Nach nachgerührt, abgesaugt und bei 100°C getrocknet. Man erhält ein schwarzes Pulver der Formel

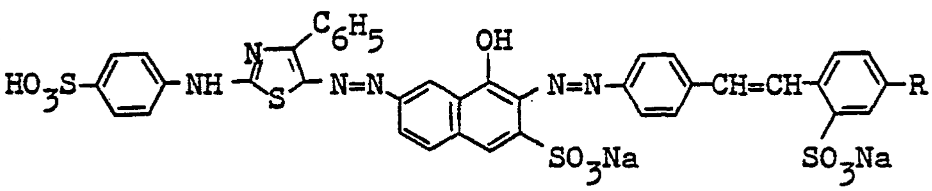

R= 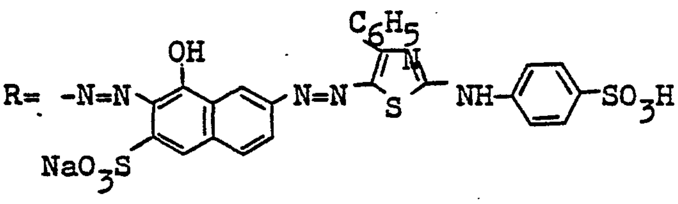 ,

das Papier in dunkelblauen Tönen mit guten Echtheiten färbt.

Die in der nachfolgenden Tabelle aufgeführten Farbstoffe mit ähnlichen coloristischen Eigenschaften lassen sich analog zu Beispiel 1 darstellen.

| Bsp. | 1. Kupplungs-komponente | 2. Kupplungs-komponente | Nuance der Färbung auf Papier |
|---|---|---|---|
| 2 | 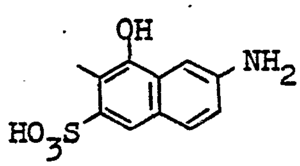 | 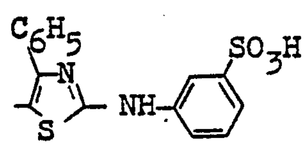 | dunkelblau |
| 3 | 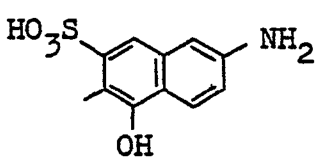 | " | " |
| 4 | 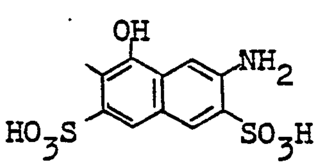 | 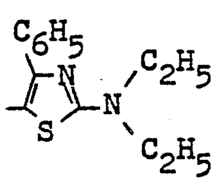 | " |

| Bsp. | 1. Kupplungskomponente | 2. Kupplungskomponente | Nuance der Färbung auf Papier |
|---|---|---|---|
| 5 | 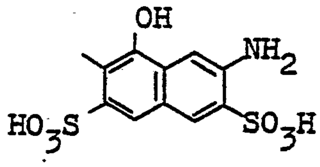 | 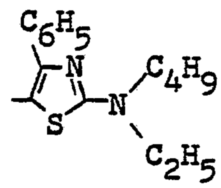 | dunkelblau |
| 6 | " | 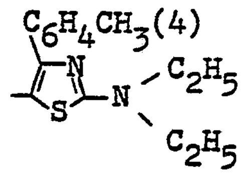 | " |
| 7 | " | 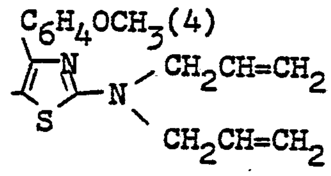 | " |
| 8 | " | 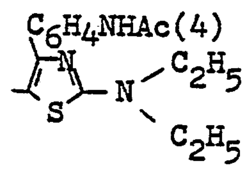 | " |
| 9 | 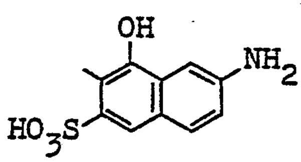 | 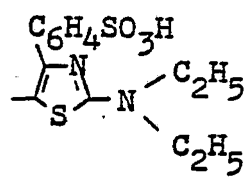 | " |
| 10 | " | 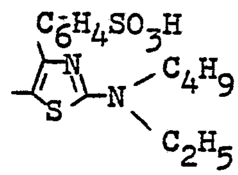 | " |
| 11 | " | 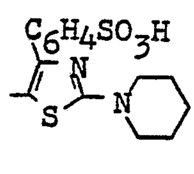 | " |

| Bsp. | 1. Kupplungskomponente | 2. Kupplungskomponente | Nuance der Färbung auf Papier |
|---|---|---|---|
| 12 | 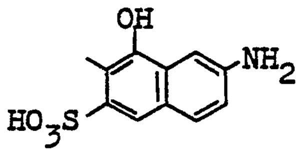 | 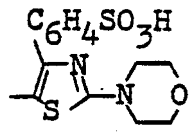 | dunkelblau |
| 13 | 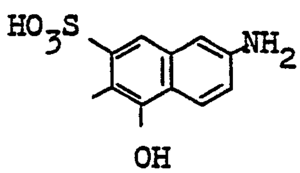 | 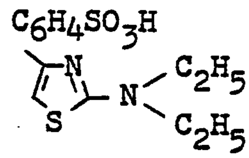 | " |
| 14 | 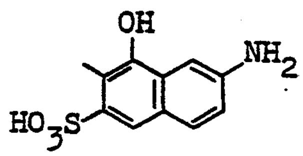 | 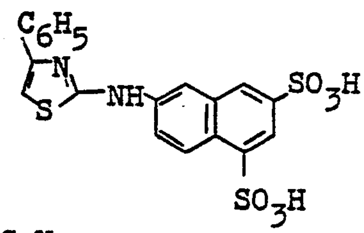 | " |
| 15 | " | 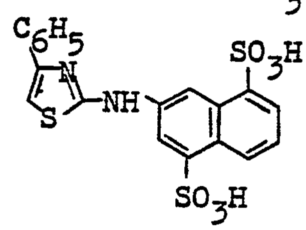 | " |
| 16 | 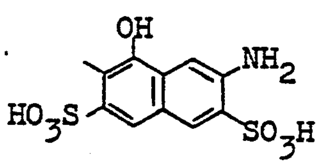 | 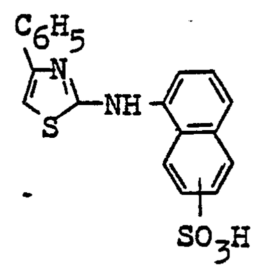 | " |
| 17 | " | 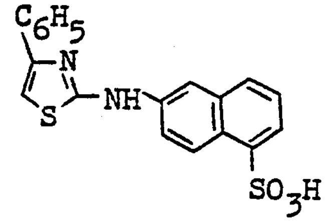 | " |

| Bsp. | 1. Kupplungskomponente | 2. Kupplungskomponente | Nuance der Färbung auf Papier |
|---|---|---|---|
| 18 | 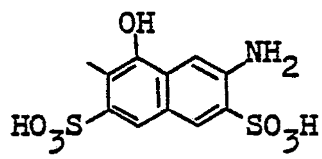 | 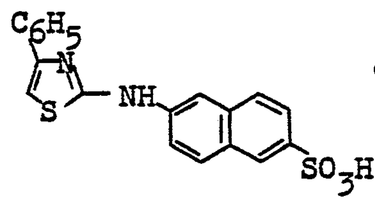 | dunkelblau |
| 19 | 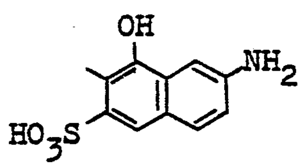 | 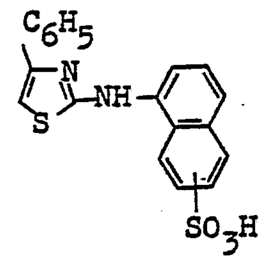 | " |
| 20 | " | $HO_3SC_6H_3$-$NHCOCH_3$ 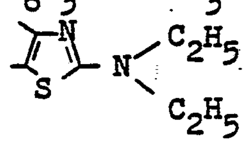 | " |

Beispiel 21

40 Teile 4-Amino-4'-nitrostilben-2,2'-disulfonsäure werden in 600 Teilen Wasser bei etwa 50 °C neutral gelöst und nach dem Abkühlen auf Raumtemperatur mit einer Lösung von 7,0 Teilen Natriumnitrit in 50 Teilen Wasser versetzt. Anschließend gibt man die Lösung unter intensivem Rühren zu 200 Teilen Eis und 120 Volumenteilen einer 5-normalen Salzsäure. Nach ungefähr 2stündigem Rühren bei 0 - 5 °C ist die Diazotierung beendet. Man entfernt überschüssiges Nitrit mit möglichst wenig Amidosulfonsäure und läßt dann die Suspension des Diazoniumsalzes in dünnem Strahl unter Rühren zu einer schwach alkalischen Lösung von 24 Teilen 2-Amino-8-hydroxynaphthalin-6-sulfonsäure in 300 Teilen Wasser, 4 Teilen Ätznatron und 11,0 Teilen Natriumcarbonat zulaufen, wobei man durch Zugabe von 20 Teilen Ätznatron

in Form einer 20 %igen Lösung einen pH-Wert von 9 - 10 einhält. Man rührt etwa 1 Stunde nach und reduziert darauf die Nitroazoverbindung bei 40 °C mit einer Lösung von 12 Teilen Natriumsulfid. Danach wird die Diaminoazoverbindung mit Salzsäure auf einen pH-Wert von etwa 1 angesäuert und abgesaugt. Anschließend löst man den Filterkuchen in 3000 Teilen Wasser mit Natronlauge bei pH 11 und filtriert. Das Filtrat wird mit einer Lösung von 7 Teilen Natriumnitrit in Wasser versetzt und dann in ein Gemisch von 200 Teilen Eis und 160 Volumenteilen einer 5-normalen Salzsäure eingegossen.

Nach etwa 2 Stunden ist die Diazotierung beendet. Man entfernt überschüssiges Nitrit mit Amidosulfonsäure und fügt zur Suspension des Bisdiazoniumsalzes eine neutrale Lösung von 23,2 Teilen 1-Aminonaphthalin-6-sulfonsäure in 200 Teilen Wasser und 11,0 Teilen Natriumcarbonat zu. Dann stellt man das Reaktionsgemisch mit einer 1,25-normalen Natriumcarbonatlösung auf einen pH-Wert von etwa 3 ein. Die halbseitige Kupplung ist nach etwa 2,5 Stunden bei 10 - 15 °C beendet. Man gibt dann eine neutrale Lösung von 25,0 Teilen 2-Amino-8-hydroxynaphthalin-6-sulfonsäure in 300 Teilen Wasser und 11,0 Teilen Natriumcarbonat zu und erhöht den pH-Wert mit etwa 50 Teilen Natriumcarbonat auf 9. Nach dem Rühren über Nacht versetzt man die Farbstoffsuspension mit 800 Teilen Kaliumchlorid und saugt nach etwa 2 Stunden ab. Nach dem Trocknen bei 60 °C unter vermindertem Druck erhält man die Verbindung der Formel

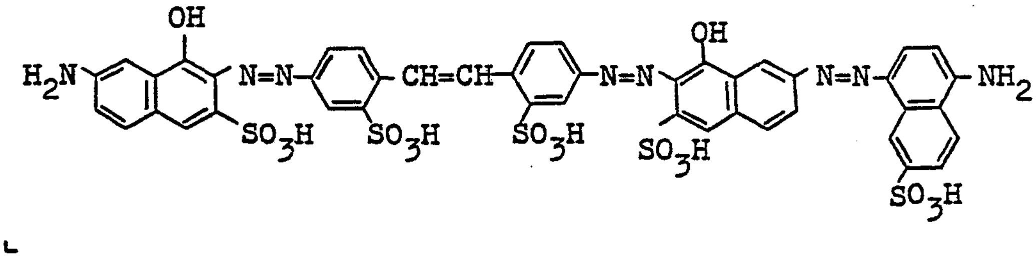

als dunkles Pulver, das Papier in dunkelblauen Tönen von hoher Substantivität färbt.

In der folgenden Tabelle sind weitere Farbstoffe angegeben, die sich analog Beispiel 21 darstellen lassen.

| Bsp. | 1. Kupplungskomponente | 2. Kupplungskomponente | 3. Kupplungskomponente | Nuance der Färbung auf Papier |
|---|---|---|---|---|
| 22 | 2-Amino-8-hydroxy-naphthalin-6-sulfonsäure | 2-Amino-8-hydroxy-naphthalin-6-sulfonsäure | 2-Amino-8-hydroxy-naphthalin-6-sulfonsäure | rötlich dunkelblau |
| 23 | 2-Amino-8-hydroxy-naphthalin-3,6-disulfonsäure | 1-Aminonaphthalin-6,7-sulfonsäure | 2-Amino-8-hydroxy-naphthalin-6-sulfonsäure | dunkelblau |
| 24 | 2-Amino-5-hydroxy-naphthalin-7-sulfonsäure | 1-Aminonaphthalin-6-sulfonsäure | 2-Amino-5-hydroxy-naphthalin-7-sulfonsäure | " |
| 25 | 2-Amino-8-hydroxy-naphthalin-6-sulfonsäure | 1-Aminonaphthalin-6-sulfonsäure | 2-Phenylamino-8-hydroxy-naphthalin-6-sulfonsäure | " |
| 26 | 2-Amino-8-hydroxy-naphthalin-6-sulfonsäure | 1-Aminonaphthalin-6-sulfonsäure | 2-(ß-Hydroxyäthylamino)-8-hydroxy-naphthalin-6-sulfonsäure | " |

| Bsp. | 1. Kupplungs-komponente | 2. Kupplungs-komponente | 3. Kupplungs-komponente | Nuance der Färbung auf Papier |
|---|---|---|---|---|
| 27 | 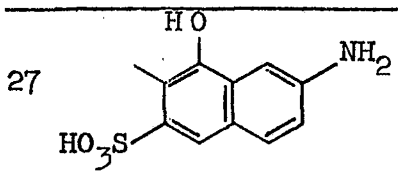 | 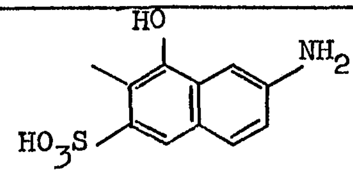 | 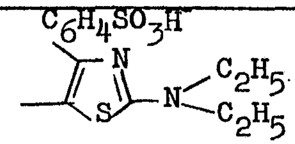 | dunkelblau |
| 28 | " | 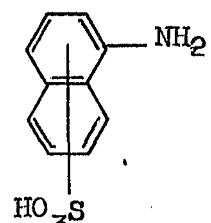 | " | " |
| 29 | " | 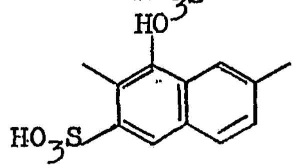 | 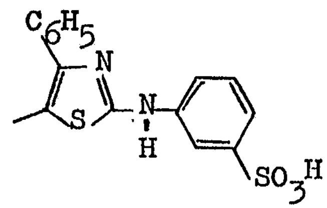 | " |
| 30 | 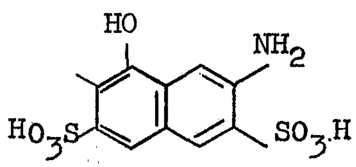 | 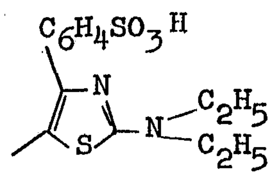 | 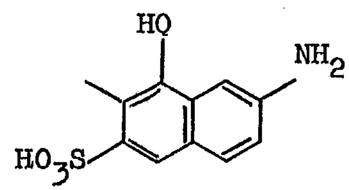 | " |

## Patentansprüche

1. Polyazofarbstoffe, die in Form der freien Säure der allgemeinen Formel I

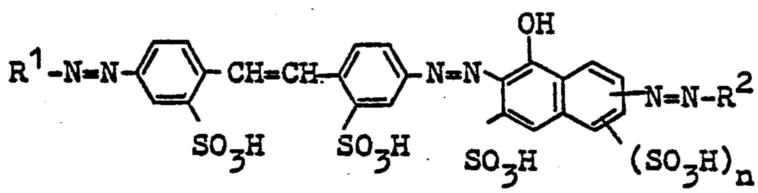

I

entsprechen, in der

n die Zahlen 0 oder 1

$R^1$ einen Rest der Formel

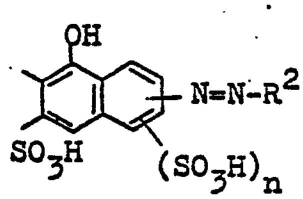

,

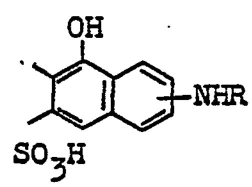

oder

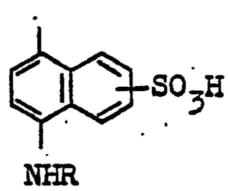

$R^2$ einen Rest der Formel

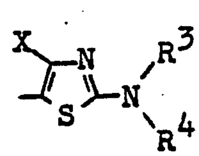

,

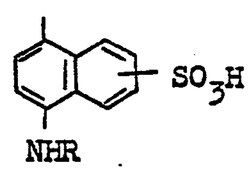

oder

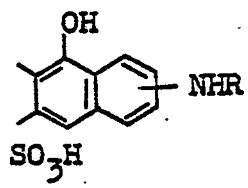

R Wasserstoff, gegebenenfalls durch Hydroxy, $C_1$- bis $C_4$-Alkoxy, Carboxyl oder Cyan substituiertes $C_1$- bis $C_4$-Alkyl, Allyl, Cyclohexyl, Benzyl, Phenyl oder Tolyl,

$R^3$ gegebenenfalls substituiertes Alkyl, Alkenyl, Aralkyl, Cycloalkyl oder Aryl,

$R^4$ Wasserstoff oder gegebenenfalls substituiertes Alkyl oder Alkenyl und

X gegebenenfalls substituiertes Alkyl oder Aryl bedeuten.

2. Verbindungen gemäß Anspruch 1, bei denen $R^1$ und $R^2$ ein Rest der Formel

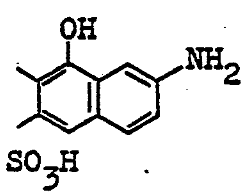

oder

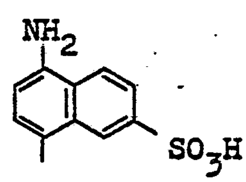

sind.

3. Verbindungen gemäß Anspruch 1, bei denen $R^1$ ein Rest der Formel

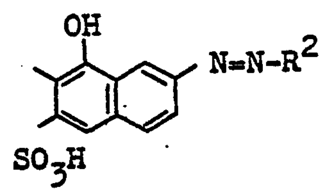

ist, und

$R^2$ der Formel

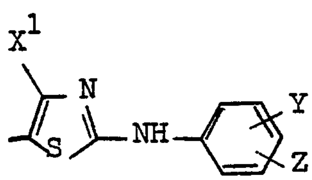

oder

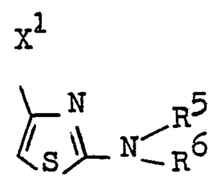

entspricht, wobei

$X^1$ gegebenenfalls durch Chlor, Methyl, Methoxy oder Äthoxy substituiertes Phenyl,

Y Wasserstoff, Chlor, Methyl, Methoxy oder Hydroxysulfonyl,

Z Wasserstoff oder Hydroxylsulfonyl und

$R^5$ und $R^6$ unabhängig voneinander $C_1$- bis $C_4$-Alkyl oder Allyl bedeuten.

4. Verwendung der Verbindungen gemäß Anspruch 1 zum Färben von cellulosehaltigem Material.

0013750

Europäisches Patentamt

# EUROPÄISCHER RECHERCHENBERICHT

Nummer der Anmeldung
EP 79 10 5325

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | DE - A - 2 504 868 (SANDOZ)<br>* Ansprüche *<br>-- | 1 | C 09 B 35/36<br>35/50<br>35/56<br>D 06 P 1/06 |
| A | FR - A - 988 979 (GAF)<br>* Zusammenfassung *<br>---- | 1 | |
| | | | RECHERCHIERTE SACHGEBIETE (Int. Cl. 3) |
| | | | C 09 B 35/36<br>35/50<br>35/56<br>D 06 P 1/06 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 21-04-1980 | MALHERBE |